# EUROPÄISCHE PATENTSCHRIFT

(11) **EP 2 788 100 B1**
(45) Veröffentlichungstag und Bekanntmachung des Hinweises auf die Patenterteilung: **03.10.2018**
(21) Anmeldenummer: 12791702.9
(22) Anmeldetag: 28.11.2012
(51) Int. Cl.: B01D 29/21, B01D 29/96

(54) **FILTERVORRICHTUNG**
FILTER DEVICE
DISPOSITIF FILTRANT

(30) Priorität: 08.12.2011 DE 102011120680
(43) Veröffentlichungstag der Anmeldung: 15.10.2014
(73) Patentinhaber: Hydac Filtertechnik GmbH, 66280 Sulzbach/Saar (DE)
(72) Erfinder: SANN, Norbert, 66292 Riegelsberg (DE); RÖDER, Dirk, 66123 Saarbrücken (DE)
(74) Vertreter: Bartels und Partner, Patentanwälte
(86) Internationale Anmeldenummer: PCT/EP2012/004901
(87) Internationale Veröffentlichungsnummer: WO 2013/083245

(56) Entgegenhaltungen:
- WO-A1-2009/019442
- JP-U- H01 163 508
- US-A- 2 413 991
- US-A- 5 762 788
- US-A1- 2011 073 537

## Beschreibung

Die Erfindung betrifft eine Filtervorrichtung mit den Merkmalen im Oberbegriff von Anspruch 1.

Filtervorrichtungen zur Aufnahme von Filterelementen sind in einer Vielzahl von Ausführungsformen auf dem Markt frei erhältlich. Ein nicht unbedeutender Anteil der Herstellungskosten entfällt bei derartigen Filtervorrichtungen auf die Ausbildung der Halteeinrichtung zur lösbaren Fixierung des Filterelements innerhalb des zugehörigen Gehäuses sowie auf die Dichteinrichtung zum Abdichten des Inneren des Filterelements gegenüber dem Filtergehäuse.

Bei einer im Dokument DE 10 2004 029 225 A1 aufgezeigten Filtervorrichtung der eingangs genannten Gattung weist die Verschraubung ein in den Gehäusedeckel unmittelbar eingearbeitetes Innengewinde auf, in das ein Außengewinde einschraubbar ist, das an einem am betreffenden Filterelement nach außen vorstehenden Anschlussstutzen gebildet ist. Die Dichteinrichtung ist durch eine axial vorstehende, den Anschlussstutzen konzentrisch umgebende Dichtkante gebildet, die beim Festziehen der Verschraubung durch Verpressen der Dichtkante die Abdichtung vornimmt. Diese Lösung ist insofern problematisch, als die Sicherheit der Abdichtung von der an der Dichtkante wirkenden Anpresskraft abhängig ist, was ein starkes Festziehen der Verschraubung erfordert, woraus sich die Forderung ergibt, die Endkappe des Filterelements formstabil auszubilden, um bei starkem Festziehen Verformungen der Endkappe zu vermeiden. Bei der üblichen Bauweise der Endkappen aus Kunststoffmaterial ergeben sich diesbezüglich Probleme.

Aus der DE 11 89 520 geht ein Wegwerffilter für Flüssigkeiten hervor. In einem Gehäuse ist ein austauschbares Filterelement anordenbar, das eine Endkappe aufweist, die zur Fluidleitung zur Reinseite wie zur Rohseite ausgebildet ist. Die Endkappe ist mit einem Rohrstutzen am Filtergehäuse verschraubbar. Zwischen dem Filtergehäuse und der Endkappe ist zudem in einem radial äußeren Bereich ein umlaufendes Dichtelement vorgesehen.

Die US 4 719 012 zeigt ein anschraubbares Wegwerffilterelement auf. An einem Rohrstutzen ist hierbei eine Dichtanordnung vorgesehen zur Abdichtung der Fluidverbindung von der Innenseite des Filterelements zum Rohrstutzen.

Die US 2011/0073537 A1 beschreibt eine gattungsgemäße Filtervorrichtung, mit mindestens einem in einem Filtergehäuse aufnehmbaren Filterelement und einer zum lösbaren Festlegen desselben im Filtergehäuse dienenden Halteeinrichtung, die zur Bildung einer zwischen einem Gehäusedeckel des Filtergehäuses und dem Filterelement wirksamen Verschraubung korrespondierende Gewindestrecken aufweist, wobei eine Dichteinrichtung vorgesehen ist, die zwischen dem Filterelement und dem Gehäusedeckel eine Abdichtung vornimmt, wobei die Verschraubung durch zumindest teilweise im Inneren des betreffenden Filterelements befindliche Gewindestrecken gebildet ist, wobei sich die dem Filterelement zugehörige Gewindestrecke an einem Anschlussstutzen befindet, der sich als Bestandteil einer Endkappe des Filterelements in dessen inneren Filterhohlraum erstreckt, wobei sich die dem Gehäusedeckel zugehörige Gewindestrecke an einem mit dem Anschlussstutzen des Filterelements verschraubbaren Aufnahmestutzen am Gehäusedeckel befindet und wobei der Aufnahmestutzen durch ein am Gehäusedeckel angebrachtes, gesondertes Bauteil in Form eines Rohrstückes gebildet ist.

Weitere Filtervorrichtungen gehen aus der WO 2009/019442 A1 und der JP H01-163508 hervor.

Im Hinblick hierauf stellt sich die Erfindung die Aufgabe, eine Filtervorrichtung zur Verfügung zu stellen, die, obwohl sie einfach und kostengünstig herstellbar ist, eine betriebssichere Festlegung des Filterelements und die betriebssichere Abdichtung desselben gegenüber dem Gehäusedeckel gewährleistet.

Erfindungsgemäß ist diese Aufgabe durch eine Filtervorrichtung gelöst, die die Merkmale des Patentanspruchs 1 in seiner Gesamtheit aufweist.

Gemäß dem Kennzeichen von Anspruch 1 ist vorgesehen, dass das Rohrstück durch Einpressen am Gehäusedeckel befestigt ist.

Der Aufnahmestutzen ist durch ein am Gehäusedeckel angebrachtes, gesondertes Bauteil in Form eines Rohrstückes gebildet. Dadurch eröffnet sich die vorteilhafte Möglichkeit, den Einsatz von Filterelementen bestimmter Spezifikation vorzuschreiben, indem die jeweiligen Gehäusedeckel mit Aufnahmestutzen in Form von speziell gestalteten Rohrstücken versehen werden. Hierfür können Rohrstücke mit speziell ausgebildeten Gewindestrecken benutzt werden, die eine Verschraubung lediglich mit einem dazu passenden Gewinde des Anschlussstutzens des Filterelements zulassen. Dadurch ist auch das Einsetzen von Billigelementen als Ersatzteil vermeidbar, die neben ihrer grundsätzlich schlechten Qualität häufig aufgrund ihrer wenig speziellen Anpassung für das vorgesehene, zu filtrierende Medium Fehlfunktionen bewirken können.

Dadurch, dass die Verschraubung durch zumindest teilweise im Inneren des Filterelements befindliche Gewindestrecken gebildet ist, eröffnet sie die vorteilhafte Möglichkeit, für die Dichteinrichtung anstelle einer an der Außenseite der Endkappe befindlichen, durch Festziehen der Verschraubung zu verpressenden Axialdichtung, eine Dichtungsanordnung vorzusehen, die den im Inneren des Filterelements befindlichen Gewindestrecken zugeordnet ist. Dadurch kann auf konstruktiv einfache Weise beispielsweise eine Radialdichtung zum Einsatz kommen, deren Dichtwirkung nicht von einer durch entsprechend starkes Festziehen der Verschraubung zu erzeugenden Dichtkraft abhängig ist.

Die dem Filterelement zugehörige Gewindestrecke befindet sich an einem Anschlussstutzen, der sich als Bestandteil einer Endkappe des Filterelements in dessen inneren Filterhohlraum erstreckt.

Die dem Gehäusedeckel zugehörige Gewindestrecke befindet sich mit besonderem Vorteil an einem mit dem Anschlussstutzen des Filterelements verschraubbaren Aufnahmestutzen am Gehäusedeckel.

Hinsichtlich der Gestaltung der Dichteinrichtung kann mit Vorteil so vorgegangen sein, dass die Dichteinrichtung zumindest ein Dichtelement aufweist, das die Außenseite des Aufnahmestutzens gegen die Innenseite des Anschlussstutzens des Filterelements abdichtet.

Hierbei kann die Anordnung mit besonderem Vorteil so getroffen sein, dass im Eingangsbereich des Anschlussstutzens der Endkappe zumindest ein gewindefreier Abschnitt einen Abdichtbereich bildet, an dem zumindest ein Dichtelement die Abdichtung zum Aufnahmestutzen des Gehäusedeckels vornimmt.

Auch am Anfangsbereich des Aufnahmestutzens des Gehäusedeckels kann ein gewindefreier Abschnitt den Abdichtbereich bilden.

Die Anordnung kann mit Vorteil so getroffen sein, dass die Gewindestrecken am Aufnahmestutzen durch ein Außengewinde und am Anschlussstutzen durch ein Innengewinde gebildet sind. Ferner können die Gewindegänge der Gewindestrecken als Rundgewinde ausgebildet sein.

Für die Abdichtung zwischen der Außenseite des Aufnahmestutzens und der Innenseite des Anschlussstutzens des Filterelements kann im Abdichtbereich des Aufnahmestutzens eine Ringnut für ein betreffendes Dichtelement ausgebildet sein.

Nachstehend ist die Erfindung anhand eines in der Zeichnung dargestellten Ausführungsbeispiels im Einzelnen erläutert. Es zeigen:
- Fig. 1: einen Längsschnitt eines Ausführungsbeispiels der erfindungsgemäßen Filtervorrichtung;
- Fig. 2: einen gegenüber Fig. 1 in größerem Maßstab gezeichneten Teillängsschnitt lediglich des dem Gehäusedeckel benachbarten Teils des Filtergehäuses des Ausführungsbeispiels ohne eingesetztes Filterelement; und
- Fig. 3: einen der Fig. 2 entsprechenden Teillängsschnitt, jedoch mit eingesetztem Filterelement.

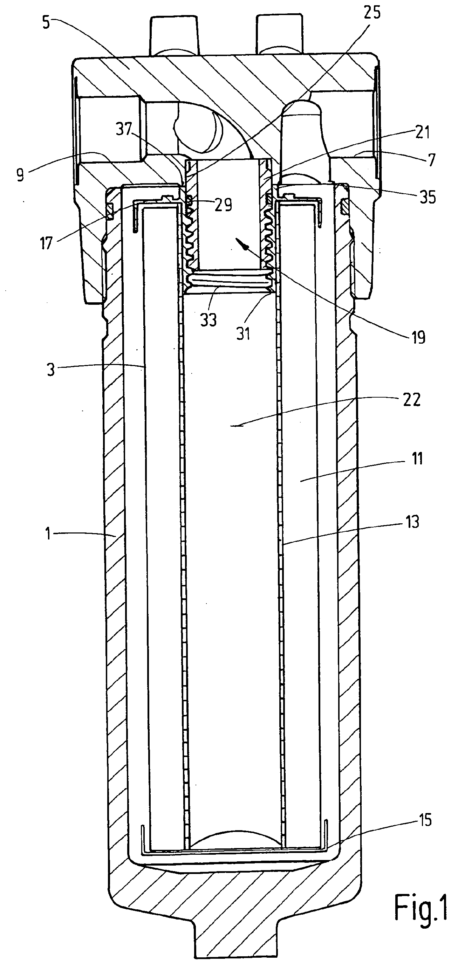

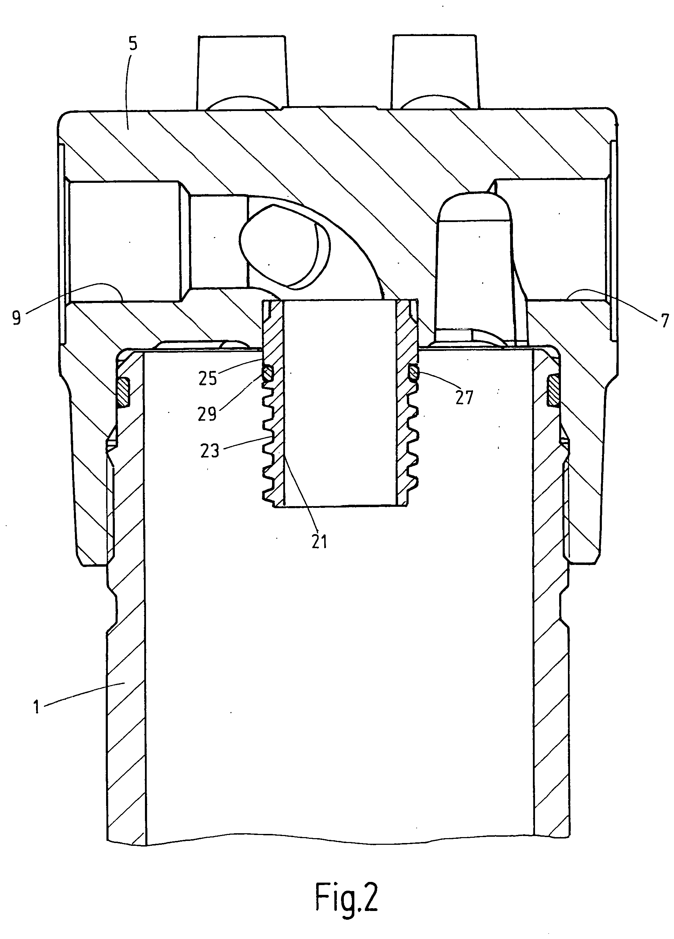

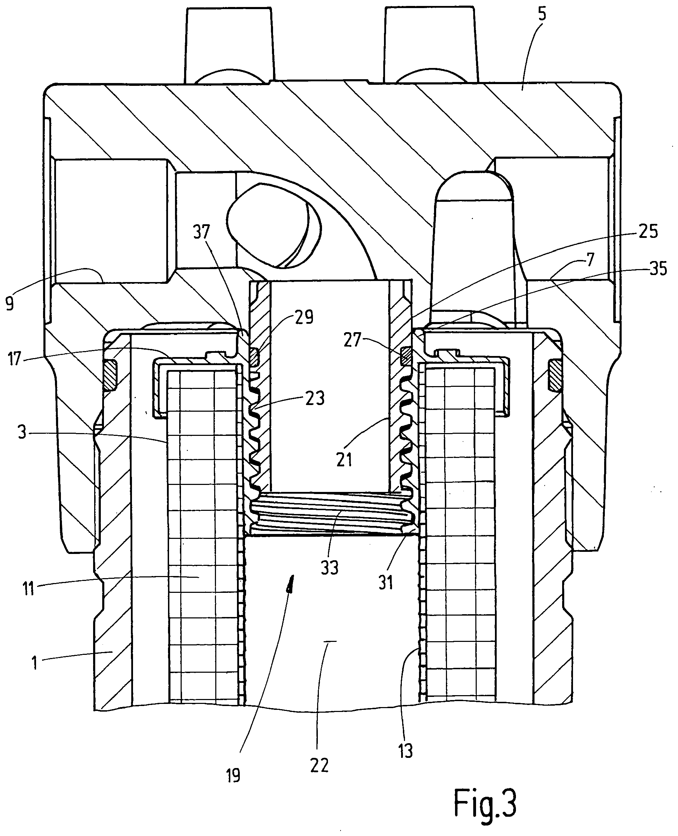

Das in Fig. 1 zur Gänze gezeigte Ausführungsbeispiel weist ein bodenseitig geschlossenes, topfartiges Filtergehäuse 1 auf, in dem ein Filterelement 3 aufnehmbar ist. Das Filtergehäuse 1 ist an dem in der Zeichnung oben liegenden Ende durch einen Gehäusedeckel 5 abgeschlossen, der als Schraubdeckel ausgeführt ist und Fluidanschlüsse aufweist, von denen einer den Gehäuseeingang 7 für den Zustrom von Unfiltrat und der andere den Gehäuseausgang 9 für die Abgabe des Filtrats bildet. Das Filterelement 3, das in der Art einer sog. Filterpatrone ausgebildet ist, weist in der bei derartigen Filterelementen üblichen Weise ein ein fluiddurchlässiges Stützrohr 13 umgebendes Filtermedium 11 auf, das vorzugsweise aus einer mehrlagigen Filtermatte, die sternartig oder plisseeartig gefaltet ist, aufgebaut ist. In der bei derartigen Filterelementen 3 üblichen Weise ist das Filtermedium 11 endseitig durch eine in der Zeichnung untere Endkappe 15 und eine obere Endkappe 17 eingefasst. Die Halteeinrichtung für die lösbare Lagefestlegung des Filterelements 3 im Filtergehäuse 1 ist durch eine zwischen der oberen Endkappe 17 und dem Gehäusedeckel 5 wirksame Verschraubung gebildet. Der Aufbau dieser in Fig. 1 und 3 als Ganzes mit 19 bezeichneten Halteeinrichtung ist insbesondere aus Fig. 2 und 3 deutlicher ersichtlich. Die dem Gehäusedeckel 5 zugehörige Komponente der Halteeinrichtung 19 ist durch einen Aufnahmestutzen gebildet. Dieser hat die Form eines Rohrstückes 21, das vom Gehäusedeckel 5 axial ins Innere des Filtergehäuses 1 vorspringt. Das Rohrstück 21 stellt bei im Filtergehäuse 1 befindlichem Filterelement 3, siehe Fig. 1, die Fluidverbindung zwischen dem vom Stützrohr 13 umgebenen, inneren Filterhohlraum 22, der bei der Filtration die Reinseite bildet, und dem Gehäuseausgang 9 des Gehäusedeckels 5 her. Das am Gehäusedeckel 5 durch Einpressen befestigte Rohrstück 21 weist, von seinem freien Ende ausgehend, eine Gewindestrecke 23 in Form eines Außengewindes mit ein Rundgewinde bildenden Gewindegängen auf, siehe Fig. 2. In einem sich an das obere Ende der Gewindestrecke 23 anschließenden, gewindefreien Abschnitt 25 befindet sich eine Ringnut 27 als Sitz für ein ringförmiges Dichtelement 29, das Bestandteil einer der Halteeinrichtung 19 zugeordneten Dichteinrichtung ist, welche die Abdichtung zwischen dem Filterelement 3 und dem Gehäusedeckel 5 vornimmt.
Die dem Filterelement 3 zugeordnete Komponente der Halteeinrichtung 19 ist durch einen Anschlussstutzen 31 gebildet, der als einstückiges Bestandteil an die obere Endkappe 17 angeformt ist. Der Anschlussstutzen 31, der sich in den inneren Filterhohlraum 22 des Filterelements 3 erstreckt, weist, ausgehend vom inneren Ende, eine Gewindestrecke 33 mit Gewindegängen, die zur Gewindestrecke 23 des Rohrstückes 21 korrespondieren, auf. An das obere Ende der Gewindestrecke 33 schließt sich ein gewindefreier Abschnitt 35 an, der in Zusammenwirkung mit dem Dichtelement 29 am gewindefreien Abschnitt 25 des Rohrstückes 21 die Dichteinrichtung bildet.

Wie am besten aus Fig. 3 zu ersehen ist, liegt bei im Filtergehäuse 1 befindlichem, durch Verschrauben gesicherten Filterelement 3 das obere Ende des gewindefreien Abschnitts 35 der Endkappe 17 bei 37 (Fig. 3) am Gehäusedeckel 5 an. Das auf den gewindefreien Abschnitt 35 des Anschlussstutzens 31 ausgerichtete Dichtelement 29 dichtet den bei der Filtration die Reinseite bildenden Filterhohlraum 22 gegenüber dem Rohrstück 21 und damit gegenüber dem Gehäusedeckel 5 ab.

Dadurch, dass die Lagesicherung des Filterelements 3 durch Verschraubung mit dem Aufnahmestutzen am Gehäusedeckel 5, d.h. mit dem Gewinde des Rohrstückes 21 erfolgt, ist sichergestellt, dass im Filtergehäuse 1 lediglich ein Filterelement 3 vorgegebener Spezifikation eingebaut werden kann. Der erfindungsgemäße Aufbau der Halteeinrichtung mit einem als Aufnahmestutzen dienenden Rohrstück 21 eröffnet die Möglichkeit, bei jeweils gleicher Bauweise der Filtervorrichtung diese für unterschiedliche Einsatzzwecke für die Benutzung eines hierfür jeweils vorgesehenen, geeigneten Typs des Filterelements 3 herzurichten, indem der Gehäusedeckel 5 mit einem für den vorgegebenen Typ des Filterelements 3 passenden Rohrstück 21 versehen wird.

## Patentansprüche

1. Filtervorrichtung, mit mindestens einem in einem Filtergehäuse (1) aufnehmbaren Filterelement (3) und einer zum lösbaren Festlegen desselben im Filtergehäuse (1) dienenden Halteeinrichtung (19), die zur Bildung einer zwischen einem Gehäusedeckel (5) des Filtergehäuses (1) und dem Filterelement (3) wirksamen Verschraubung korrespondierende Gewindestrecken (23, 33) aufweist, wobei eine Dichteinrichtung (29, 35) vorgesehen ist, die zwischen dem Filterelement (3) und dem Gehäusedeckel (5) eine Abdichtung vornimmt, wobei die Verschraubung durch zumindest teilweise im Inneren (22) des betreffenden Filterelements (3) befindliche Gewindestrecken (23, 33) gebildet ist, wobei sich die dem Filterelement (3) zugehörige Gewindestrecke (33) an einem Anschlussstutzen (31) befindet, der sich als Bestandteil einer Endkappe (17) des Filterelements (3) in dessen inneren Filterhohlraum (22) erstreckt, wobei sich die dem Gehäusedeckel (5) zugehörige Gewindestrecke (23) an einem mit dem Anschlussstutzen (31) des Filterelements (3) verschraubbaren Aufnahmestutzen (21) am Gehäusedeckel (5) befindet und wobei der Aufnahmestutzen durch ein am Gehäusedeckel (5) angebrachtes, gesondertes Bauteil in Form eines Rohrstückes (21) gebildet ist, **dadurch gekennzeichnet, dass** das Rohrstück (21) durch Einpressen am Gehäusedeckel (5) befestigt ist.

2. Filtervorrichtung nach Anspruch 1, **dadurch gekennzeichnet, dass** die Dichteinrichtung zumindest ein Dichtelement (29) aufweist, das die Außenseite des Aufnahmestutzens (21) gegen die Innenseite des Anschlussstutzens (31) des Filterelements (3) abdichtet.

3. Filtervorrichtung nach Anspruch 1 oder 2, **dadurch gekennzeichnet, dass** im Eingangsbereich des Anschlussstutzens (21) der Endkappe (17) zumindest ein gewindefreier Abschnitt (35) einen Abdichtbereich bildet, an dem zumindest ein Dichtelement (29) die Abdichtung zum Aufnahmestutzen (21) des Gehäusedeckels (5) vornimmt.

4. Filtervorrichtung nach einem der vorstehenden Ansprüche, **dadurch gekennzeichnet, dass** ein gewindefreier Abschnitt (25) am Anfangsbereich des Aufnahmestutzens (21) des Gehäusedeckels (5) den Abdichtbereich bildet.

5. Filtervorrichtung nach einem der vorstehenden Ansprüche, **dadurch gekennzeichnet, dass** die Gewindestrecke (23) am Aufnahmestutzen (21) durch ein Außengewinde und die Gewindestrecke (33) am Anschlussstutzen (31) durch ein Innengewinde gebildet sind.

6. Filtervorrichtung nach einem der vorstehenden Ansprüche, **dadurch gekennzeichnet, dass** die Gewindegänge der Gewindestrecken (23, 33) ein Rundgewinde bilden.

7. Filtervorrichtung nach einem der vorstehenden Ansprüche, **dadurch gekennzeichnet, dass** am Abdichtbereich des Aufnahmestutzens (21) eine Ringnut (27) für ein betreffendes Dichtelement (29) ausgebildet ist.

## Claims

1. A filter device having at least one filter element (3) that can be accommodated in a filter housing (1) and a holding device (19), which serves to releasably fix said filter element in the filter housing (1) and which has corresponding threaded sections (23, 33) for forming a screw connection which acts between a housing cover (5) of the filter housing (1) and the filter element (3), wherein a sealing device (29, 35) is provided, which forms a seal between the filter element (3) and the housing cover (5), wherein the screw connection is formed by threaded sections (23, 33) which are situated at least partially in the interior (22) of the respective filter element (3), wherein the threaded section (33) assigned to the filter element (3) is situated on a connecting pipe piece (31) which, as a component of an end cap (17) of the filter element (3), extends into the interior filter cavity (22) thereof, wherein the threaded section (23) assigned to the housing cover (5) is situated on a receiving pipe piece (21) on the housing cover (5), which receiving pipe piece can be screwed to the connecting pipe piece (31) of the filter element (3), and wherein the receiving pipe piece is formed by a separate component in the form of a pipe section (21) which is mounted on the housing cover (5), **characterised in that** the pipe section (21) is attached to the housing cover (5) by pressing.

2. The filter device according to claim 1, **characterised in that** the sealing device has at least one sealing element (29), which seals the outside of the receiving pipe piece (21) against the inside of the connecting pipe piece (31) of the filter element (3).

3. The filter device according to claim 1 or 2, **characterised in that** at least one thread-free section (35) forms a sealing region in the inlet region of the connecting pipe piece (31) of the end cap (17), in which at least one sealing element (29) forms the seal with the receiving pipe piece (21) of the housing cover (5).

4. The filter device according to one of the preceding claims, **characterised in that** a thread-free section (25) forms the sealing region in the initial region of the receiving pipe piece (21) of the housing cover (5).

5. The filter device according to one of the preceding claims, **characterised in that** the threaded section (23) on the receiving pipe piece (21) is formed by an external thread and the threaded section (33) on the connecting pipe piece (31) is formed by an internal thread.

6. The filter device according to one of the preceding claims, **characterised in that** the thread turns of the threaded sections (23, 33) form a round thread.

7. The filter device according to one of the preceding claims, **characterised in that** an annular groove (27) for a respective sealing element (29) is formed in the sealing region of the receiving pipe piece (21).

## Revendications

1. Dispositif de filtration, comprenant au moins un élément (3) filtrant et un dispositif (19) de maintien servant à fixer de manière amovible celui-ci dans le corps (1) du filtre et ayant, pour former un vissage efficace entre un couvercle (5) du corps (1) du filtre et l'élément (3) filtrant des sections (23, 33) filetées correspondantes, dans lequel il est prévu un dispositif (29, 35) d'étanchéité, qui donne une étanchéité entre l'élément (3) filtrant et le couvercle (5) du corps, le vissage étant formé par des sections (23, 33) filetées se trouvant, au moins en partie, à l'intérieur (22) de l'élément (3) filtrant concerné, la section (33) filetée, associée à l'élément (3) filtrant, se trouvant sur une tubulure (31) de raccordement, qui, en tant que partie constitutive d'une coiffe (17) d'extrémité de l'élément (3) filtrant, s'étend dans sa cavité (22) intérieure de filtre, la section (23) filetée, appartenant au couvercle (5) du corps, se trouvant sur une tubulure (21) de réception, pouvant se visser à la tubulure (31) de raccordement de l'élément (3) filtrant, du couvercle (5) du corps et la tubulure de réception étant formée sous la forme d'une pièce (21) tubulaire par une pièce distincte mise sur le couvercle (5) du corps, **caractérisé en ce que** la pièce (21) tubulaire est fixée au couvercle (5) du corps par enfoncement.

2. Dispositif de filtration suivant la revendication 1, **caractérisé en ce que** le dispositif d'étanchéité a au moins un élément (29) d'étanchéité, qui rend étanche le côté extérieur de la tubulure (21) de réception par rapport au côté intérieur de la tubulure (31) de raccordement de l'élément (3) filtrant.

3. Dispositif de filtration suivant la revendication 1 ou 2, **caractérisé en ce que**, dans la région d'entrée de la tubulure (31) de raccordement de la coiffe (17) d'extrémité, au moins un tronçon (35) sans filetage forme une région d'étanchéité sur laquelle au moins un élément (29) d'étanchéité donne l'étanchéité par rapport à la tubulure (21) de réception du couvercle (5) du corps.

4. Dispositif de filtration suivant l'une des revendications précédentes, **caractérisé en ce qu'**un tronçon (25) sans filetage, à la région de début de la tubulure (21) de réception du couvercle (5) du corps, forme la région d'étanchéité.

5. Dispositif de filtration suivant l'une des revendications précédentes, **caractérisé en ce que** la section (23) filetée de la tubulure (21) de réception est formée par un filetage et la section (33) filetée de la tubulure (31) de raccordement, par un taraudage.

6. Dispositif de filtration suivant l'une des revendications précédentes, **caractérisé en ce que** les pas de filetage des sections (23, 33) filetées forment un filet rond.

7. Dispositif de filtration suivant l'une des revendications précédentes, **caractérisé en ce qu'**une rainure (27) annulaire, pour un élément (29) d'étanchéité concerné, est constituée dans la région d'étanchéité de la tubulure (21) de réception.
